# FASCICULE DE BREVET EUROPEEN

(11) **EP 2 545 397 B1**
(45) Date de publication et mention de la délivrance du brevet: **04.12.2013**
(21) Numéro de dépôt: 11701681.6
(22) Date de dépôt: 03.02.2011
(51) Int. Cl.: G01S 19/11

(54) **SYSTEME AUTONOME DE POSITIONNEMENT PAR PSEUDOLITES EN ZONE CONTRAINTE ET PROCEDE DE MISE EN OEUVRE**
AUTONOMES SYSTEM ZUR POSITIONIERUNG DURCH PSEUDOLITE IN EINEM EINGESCHRÄNKTEN BEREICH UND IMPLEMENTIERUNGSVERFAHREN DAFÜR
AUTONOMOUS SYSTEM FOR POSITIONING BY PSEUDOLITES IN A CONSTRAINED ZONE AND METHOD OF IMPLEMENTATION

(30) Priorité: 12.03.2010 FR 1000999
(43) Date de publication de la demande: 16.01.2013
(73) Titulaire: Thales, 92200 Neuilly-sur-Seine (FR)
(72) Inventeur: VAN DEN BOSSCHE, Mathias, F-31100 Toulouse (FR)
(74) Mandataire: Lopez, Frédérique
(86) Numéro de dépôt international: PCT/EP2011/051525
(87) Numéro de publication internationale: WO 2011/110385

(56) Documents cités:
- US-A1- 2005 086 001
- US-B1- 6 198 432
- US-B1- 6 336 076

## Description

La présente invention concerne un système permettant à un objet équipé d'un récepteur adapté de déterminer sa position dans une zone dite contrainte.

Plus particulièrement, le système de positionnement selon la présente invention est fondé sur l'utilisation de pseudolites.

Comme cela est connu, les pseudolites, contraction de pseudo-satellites, sont des dispositifs fonctionnant selon les mêmes principes que les satellites appartenant à des constellations de satellites mises en oeuvre dans le cadre de systèmes globaux de navigation par satellites, connus sous l'acronyme anglo-saxon de GNSS, pour Global Navigation Satellite System, tels que le système GPS, pour Global Positioning System en anglais, ou le système Galiléo. A la différence des satellites, les pseudolites sont déployés au sol. Typiquement ; ils peuvent être répartis dans un bâtiment, et de manière générale, dans des zones dites contraintes.

Le principe général des systèmes de positionnement par pseudolites réside dans le fait que lesdits pseudolites émettent des signaux de positionnement dont le format est identique ou similaire à celui des messages émis par les satellites d'un système de navigation par satellites. A cette fin, on attribue généralement à chaque pseudolite un identifiant de la même famille que celui d'un satellite. Dans le contexte des constellations de satellites, ces identifiants sont appelés des codes d'étalement, comme cela est connu de l'homme du métier.

La portée des signaux émis par les pseudolites est variable ; elle dépend de leur puissance, et de leur utilisation. Des objets équipés de récepteurs adaptés peuvent acquérir ces signaux de positionnement. Comme pour un système de navigation par satellites classique, un calcul de distances entre ledit récepteur et les pseudolites dont il a acquis les signaux, puis un calcul de position par triangulation, permettent de déterminer la localisation du récepteur. Le principe du positionnement par triangulation est connu : il s'agit de déterminer la position d'un récepteur comme étant à l'intersection de sphères de centre les émetteurs et de rayon la distance entre récepteur et émetteurs. Les calculs peuvent être effectués de manière embarquée, par l'objet lui-même, ou de manière délocalisée par un calculateur.

Comme on l'a vu, les systèmes de positionnement par pseudolites sont généralement déployés dans des zones dites « contraintes ». Ces zones contraintes, typiquement, peuvent être de bâtiments à l'intérieur desquels les signaux de positionnement émis par des satellites en orbite autour de la Terre ne peuvent pas être acquis, en raison du masquage produit par les murs, les plafonds...etc. Il peut s'agir simplement de zones non couvertes par le système de navigation par satellites considéré. De manière générale, on définira une zone contrainte comme étant une zone dans laquelle des signaux de positionnement émis par des satellites ne peuvent pas être correctement acquis. A contrario, on parle de « zone ouverte » dans les zones où des signaux de positionnement émis par des satellites peuvent être acquis par un récepteur adapté. D'autre part, les satellites dont un récepteur peut théoriquement recevoir des signaux de positionnement, du fait de la position relative adéquate entre lesdits satellites et ledit récepteur, sont dits « visibles » du récepteur, tandis que les autres satellites de la constellation sont dits « non visibles ». Ces termes consacrés, « visible » et « non visible » sont utilisables dans le cas de pseudolites, l'adéquation des positions relatives étant dans ce cas déterminée non par la géométrie du globe terrestre, mais par les masquages locaux qui peuvent affecter les signaux des pseudolites.

Les définitions données ci-dessus des termes « zone contrainte », « zone ouverte », satellite ou pseudolite « visible » et satellite ou pseudolite « non visible » valent pour toute la suite de la description et pour les revendications.

Il est connu que les systèmes de positionnement par satellites peuvent présenter un serveur appelé serveur d'assistance dont le rôle est d'envoyer des informations au récepteur concernant la constellation de satellites, telles que la position des satellites visibles, et d'autres aides facilitant le traitement des signaux de positionnement. Un système de positionnement par pseudolites peut également présenter un tel serveur d'assistance. En mode dit « assisté », le serveur d'assistance peut calculer la position du récepteur à partir des calculs de pseudo-distances que ce dernier lui fournit.

Dans le cadre de la présente invention, le système de positionnement peut parfaitement fonctionner en zone contrainte sans recevoir d'informations d'un serveur d'assistance.

Les systèmes de positionnement par pseudolites connus présentent un certain nombre de défauts. En particulier, ils ne permettent pas de passer sans assistance d'une zone contrainte à une zone ouverte et vice versa, de façon continue et autonome. D'autre part, ils ne permettent généralement pas de démarrage à froid sans assistance ou sans connaissance de la position initiale du récepteur. Par conséquent, les systèmes connus impliquent généralement l'utilisation de récepteurs conçus spécifiquement pour un fonctionnement en zone contrainte et l'acquisition de signaux de positionnement émis par des pseudolites.

Dans d'autres cas, ils nécessitent une intervention sur le récepteur pour que celui-ci commence à acquérir des signaux émis par des pseudolites. En tout état de cause, les modes de fonctionnement en zone contrainte et en zone ouverte ne sont généralement pas compatibles, en ce sens qu'ils ne peuvent être actifs simultanément.

Par ailleurs, une contrainte importante à prendre en considération réside dans le fait que les codes d'étalement des satellites appartenant à des constellations de satellites sont réservés pour lesdits satellites. Il n'est pas possible d'utiliser d'autres codes sans devoir concevoir des récepteurs spécifiques car les récepteurs du marché sont conçus pour acquérir des signaux de positionnement provenant desdits satellites.

Les documents US2005/086001 et US6336076 divulguent le principe d'assignation des codes d'étalement des satellites du système GPS aux pseudolites.

Une solution connue visant à surmonter ces problèmes consiste à attribuer aux pseudolites des codes d'étalement de satellites non visibles du point où se trouve le récepteur. Cependant, le problème persiste totalement pour les récepteurs ne bénéficiant pas de données d'assistance émises par un serveur d'assistance, et qui ne connaissent pas leur position initiale à l'allumage du récepteur.

Un tel récepteur, ne fonctionnant pas en mode assisté et ne connaissant pas sa position initiale, est, selon l'état de la technique, incapable de reconnaître qu'il a affaire à des pseudolites. Par conséquent, il n'acquiert pas les signaux de positionnement émis par les pseudolites équipant la zone contrainte dans laquelle il se trouve et il lui est impossible de déterminer sa position.

Un but de l'invention est de résoudre ce problème technique en proposant un système de positionnement par pseudolites apte à fonctionner avec des récepteurs standards et pouvant acquérir de manière transparente, du point de vue du récepteur, des signaux de positionnement émis par des pseudolites comme s'il s'agissait de signaux de positionnement émis par des satellites appartenant à une constellation de satellites d'un système de navigation par satellites, de reconnaître qu'il a affaire à des pseudolites et cela sans bénéficier de données fournies par un serveur d'assistance.

Ainsi, l'invention a pour objet un système de positionnement d'un objet dans une zone d'intérêt présentant une zone contrainte, ledit système comprenant :
un ensemble de pseudolites répartis dans ladite zone contrainte et présentant chacun un code d'étalement correspondant au code d'étalement d'un satellite appartenant à une constellation de satellites d'un système de navigation par satellite, ladite constellation de satellites comprenant un premier ensemble de satellites et un deuxième ensemble de satellites les satellites du premier et du deuxième ensembles de satellites étant non visibles de la zone d'intérêt, et le premier et le deuxième ensembles de satellites étant de visibilité disjointe, de sorte que l'un quelconque des satellites du premier ensemble et l'un quelconque des satellites du deuxième ensemble ne peuvent pas être simultanément visibles depuis un point situé à la surface de la Terre, en ce sens que les satellites du premier et du deuxième ensembles présentent des positions relatives telles que des signaux émis par des satellites du premier ensemble et des signaux émis par des satellites du deuxième ensemble ne peuvent pas être reçus simultanément par un récepteur placé en un point situé à la surface de la Terre, chaque pseudolite émettant par ailleurs un signal de positionnement,
et un récepteur situé sur l'objet à localiser,
dans lequel lesdits pseudolites sont répartis dans la zone contrainte de telle sorte qu'en tout point de la zone contrainte, il est possible au récepteur de l'objet d'acquérir les signaux de positionnement d'au moins deux pseudolites présentant des codes d'étalement correspondant, pour l'un, à un satellite du premier ensemble, et, pour l'autre, à un satellite du deuxième ensemble, de telle manière que le récepteur recevant ces signaux de positionnement détecte l'impossibilité qu'il s'agisse de signaux émis par des satellites de la constellation de satellites et détermine par conséquent de façon totalement autonome qu'il reçoit des signaux de positionnement émis par des pseudolites.

Selon un mode de réalisation de l'invention, la constellation de satellites présentant N ensembles de satellites, N étant supérieur ou égal à 3, non visibles de la zone d'intérêt, et de visibilité disjointe, de sorte que l'un quelconque des satellites de l'un quelconque des N ensembles de satellites ne peut pas être visible en même temps que l'un quelconque des satellites de l'un quelconque des autres ensembles de satellites parmi les N ensembles de satellites depuis un point situé à la surface de la Terre, les pseudolites sont répartis dans la zone contrainte de telle sorte qu'en tout point de la zone contrainte, il est possible au récepteur de l'objet d'acquérir les signaux de positionnement d'au moins trois pseudolites présentant des codes d'étalement correspondant à des satellites appartenant à trois ensembles de satellites distincts parmi les N ensembles de satellites.

Avantageusement, les signaux de positionnement émis par les pseudolites peuvent diffuser des almanachs identiques à ceux des satellites de la constellation de satellites, de manière à assurer une continuité de service à la transition entre une zone contrainte équipée d'un ensemble de pseudolites et une zone ouverte, dépourvue de pseudolites, mais permettant la réception de signaux de positionnement émis par les satellites de la constellation, et, réciproquement, de manière à assurer une continuité de service à la transition entre une zone ouverte et une zone contrainte.

Avantageusement, un serveur connecté à l'ensemble de pseudolites est configuré pour attribuer dynamiquement à chaque pseudolite un code d'étalement adapté, choisi parmi des codes attribués aux satellites non-visibles de la zone d'intérêt.

Le récepteur situé sur l'objet à positionner peut présenter l'un au moins des modes de fonctionnement suivant :
- un mode de fonctionnement « zone contrainte » lorsque le récepteur se situe dans une zone dans laquelle il est susceptible de recevoir uniquement des signaux de positionnement émis par des pseudolites ;
- un mode de fonctionnement « zone ouverte » lorsque le récepteur se situe dans une zone dans laquelle il est susceptible de recevoir uniquement des signaux de positionnement émis par des satellites appartenant à une constellation de satellites d'un système de navigation par satellite ;
- un mode de fonctionnement « zone hybride » lorsque le récepteur se situe dans une zone dans laquelle il est susceptible de recevoir à la fois des signaux de positionnement émis par des pseudolites et des signaux de positionnement émis par des satellites appartenant à une constellation de satellites d'un système de navigation par satellite.

Le système est avantageusement apte à basculer d'un mode de fonctionnement à un autre.

Avantageusement, le récepteur sélectionne son mode de fonctionnement de manière automatique.

Avantageusement, le système de positionnement selon l'invention peut comprendre des moyens pour forcer le mode de fonctionnement du récepteur.

Avantageusement, le mode de fonctionnement du récepteur peut être choisi manuellement.

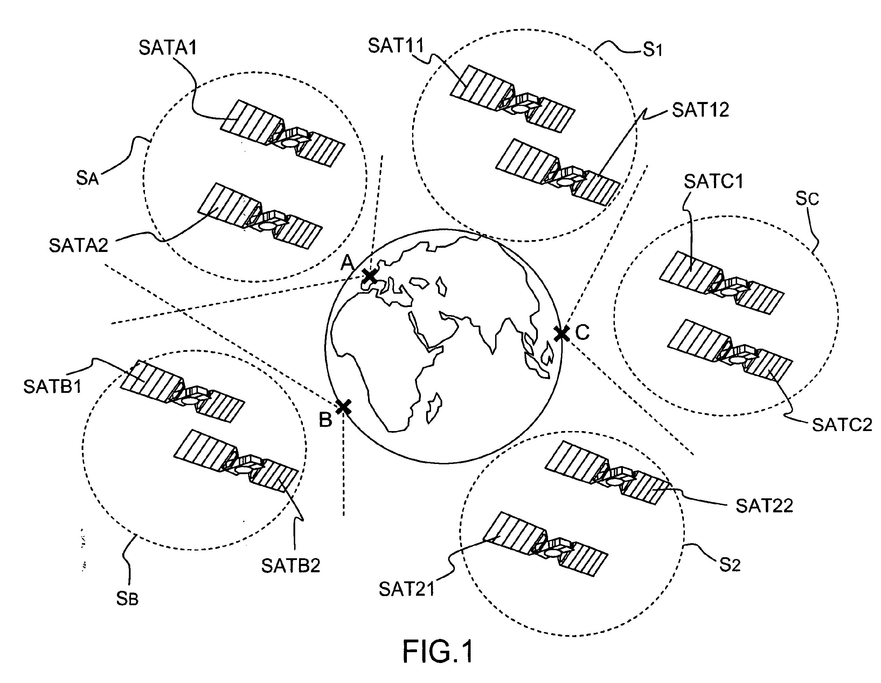

D'autres caractéristiques et avantages de l'invention apparaîtront à l'aide de la description qui suit faite en regard de la figure 1 annexée, qui représente schématiquement une constellation de satellites en orbite autour de la Terre faisant partie d'un système de navigation par satellites.

Plus précisément, la figure 1 présente une constellation de satellites comprenant des sous-ensembles de satellites SA, SB, SC, S1, S2. L'ensemble SA représente l'ensemble des satellites SATA1, SATA2 visibles d'un récepteur placé au point A, à la surface de la Terre. De même, l'ensemble SB représente l'ensemble des satellites SATB1, SATB2 visibles du récepteur placé au point B et l'ensemble SC représente l'ensemble des satellites SATC1, SATC2 visibles du récepteur placé au point C.

Comme le montre la figure 1, pour une constellation de satellites donnée, faisant partie d'un système de navigation par satellites, on peut définir des sous-ensembles de satellites, S1, S2, regroupant des satellites, SAT11, SAT12, respectivement SAT21, STA22, non visibles simultanément par un récepteur situé à la surface de la Terre. Ainsi, sur l'exemple de configuration d'une constellation de satellites présenté à la figure 1, les satellites SAT11 et SAT12 de l'ensemble S1 et les satellites SAT21 et SAT22 de l'ensemble S2 ne peuvent pas être vus simultanément, notamment ici, à titre d'illustration, des points A, B, ou C.

Le principe de base de l'invention consiste à exploiter le fait que la constellation de satellites sur laquelle s'appuie le système de positionnement par pseudolites comprend au moins deux sous-ensembles de satellites non visibles depuis la zone couverte par les pseudolites, par exemple sur la figure 1, S1 et S2, dont les satellites respectifs ne sont jamais simultanément visibles depuis la Terre.

Afin de leurrer le récepteur de l'objet que l'on cherche à positionner, l'invention propose une configuration originale de l'ensemble de pseudolites équipant la zone contrainte considérée. Ainsi, l'attribution de codes d'étalement aux pseudolites est réalisée de telle manière qu'en tout point de la zone contrainte couverte par ledit ensemble de pseudolites, un récepteur allumé sans connaître sa position initiale détecte au moins deux pseudolites présentant des codes d'étalement appartenant à des sous-ensembles de satellites S1, S2 dont les satellites respectifs ne peuvent pas être simultanément visibles. On dit que les sous-ensembles S1 et S2 sont de visibilité disjointe. Le pseudolite est alors simplement programmé pour que dans ce contexte, il détermine le fait qu'il se trouve en présence de pseudolites. Il est alors en mesure d'acquérir et de décoder les signaux de positionnement qu'il reçoit des pseudolites visibles. Les calculs de positions peuvent ensuite indifféremment être effectués de manière embarquée par le récepteur ou de manière délocalisée par un calculateur dédié avec lequel le récepteur peut communiquer.

D'un point de vue matériel, le récepteur peut parfaitement être un récepteur standard, tel qu'un récepteur GPS par exemple. Seule une simple adaptation du logiciel embarqué de ce récepteur doit être réalisée, comme expliqué ci-dessus. Il n'a pas besoin de données d'assistance car (i) il n'utilise que des codes standard de satellites et (ii) il sait déterminer qu'il a affaire à des pseudolites lorsque c'est le cas.

Le système selon l'invention fonctionne par conséquent sur la base de récepteurs standards et d'un ensemble de pseudolites répartis dans une zone contrainte considérée.

A l'allumage, le récepteur, fonctionnant en mode non assisté, cherche à acquérir tous les satellites de la constellation, c'est-à-dire tous les codes d'étalement attribués aux satellites.

De manière optionnelle, le récepteur peut être manuellement forcé à passer dans un mode de fonctionnement « zone contrainte » dans lequel il cherche exclusivement à acquérir des pseudolites. Selon une autre option, après avoir détecté de manière automatique la présence de pseudolites, le récepteur peut proposer à un utilisateur de passer en mode de fonctionnement « zone contrainte », ledit utilisateur ayant la faculté de refuser un tel basculement.

Les pseudolites se voient attribuer de façon dynamique un code d'étalement par un serveur dédié. Comme explicité plus haut, cette attribution dynamique de codes d'étalement aux pseudolites est effectuée de telle sorte qu'en tout point de la zone contrainte, les pseudolites visibles présentent des codes d'étalement de satellites appartenant à au moins deux sous-ensembles S1, S2 de visibilité disjointe.

Par ailleurs, les pseudolites diffusent de préférence, au sein des messages de positionnement qu'ils émettent, des almanachs identiques à ceux des satellites de la constellation de satellites, de manière à faciliter la continuité du service de positionnement à la transition entre une zone contrainte équipée de pseudolites et une zone ouverte.

Il est à noter par ailleurs que les informations de positionnement figurant dans les signaux de positionnement émis par les pseudolites peuvent être plus simples que celles émises par des vrais satellites ; par conséquent, la bande passante libérée peut être mise à profit pour diffuser d'autres informations vers les pseudolites, comme par exemple les positions des pseudolites voisins ou encore l'identifiant de leur code d'étalement.

En fonctionnement, le comportement du système selon l'invention est le suivant :
- En environnement ouvert : le récepteur fonctionne de façon conventionnelle puisqu'il reçoit des signaux émis par des satellites appartenant à une constellation de satellites faisant partie d'un système de navigation par satellites. Eventuellement, le récepteur peut de façon sporadique chercher à acquérir des signaux de positionnement de satellites théoriquement non visibles ; il pourrait ainsi détecter la présence de pseudolites.
- Au démarrage en zone contrainte, le récepteur cherchant à acquérir tous les satellites de la constellation détecte - au moins - deux codes d'étalement correspondant à des satellites qui ne devraient pas être visibles simultanément ; il peut alors basculer dans un mode de fonctionnement « zone contrainte » pour acquérir et décoder les signaux de positionnement émis par les pseudolites visibles; alternativement, le récepteur ne fait que proposer le basculement à l'utilisateur.
- A la transition entre une zone ouverte et une zone contrainte, le récepteur peut détecter une perte massive de satellites visibles ; dans ce cas, il peut passer directement en mode de fonctionnement « zone contrainte » ; alternativement le récepteur détecte la présence de pseudolites grâce à la procédure d'acquisition sporadique évoquée ci-dessus. Optionnellement, le récepteur peut continuer à acquérir et exploiter les signaux de positionnement émis par des satellites, tant qu'il en reçoit.
- A la transition entre une zone contrainte et une zone ouverte, le récepteur peut détecter une perte massive de pseudolites visibles et passer directement en mode de fonctionnement « zone ouverte » ; alternativement le récepteur détecte la présence de satellites visibles grâce à une procédure d'acquisition sporadique. Optionnellement, le récepteur peut continuer à acquérir et exploiter les signaux de positionnement émis par des pseudolites, tant qu'il en reçoit.

En résumé, l'invention a pour principal avantage de proposer un système de positionnement par pseudolites fonctionnant sur la base de récepteurs standards, et permettant une continuité de service entre une zone contrainte et une zone ouverte, et réciproquement. Surtout, le système de positionnement par pseudolites selon l'invention est apte à fonctionner sans données d'assistance, y compris dans le contexte d'un démarrage à froid du récepteur en zone contrainte, sans connaissance de la position initiale.

## Revendications

1. Système de positionnement d'un objet dans une zone d'intérêt présentant une zone contrainte, ledit système comprenant :
un ensemble de pseudolites répartis dans ladite zone contrainte et présentant chacun un code d'étalement correspondant au code d'étalement d'un satellite appartenant à une constellation de satellites d'un système de navigation par satellite, ladite constellation de satellites comprenant un premier ensemble de satellites (S1) et un deuxième ensemble de satellites (S2) les satellites du premier (S1) et du deuxième (S2) ensembles de satellites étant non visibles de la zone d'intérêt, et le premier (S1) et le deuxième (S2) ensembles de satellites étant de visibilité disjointe, de sorte que l'un quelconque des satellites (SAT11,SAT12) du premier ensemble (S1) et l'un quelconque des satellites (SAT21,SAT22) du deuxième ensemble (S2) ne peuvent pas être simultanément visibles depuis un point situé à la surface de la Terre, en ce sens que les satellites du premier (SAT11,SAT12) et du deuxième (SAT21,SAT22) ensembles présentent des positions relatives telles que des signaux émis par des satellites (SAT11,SAT12) du premier ensemble (S1) et des signaux émis par des satellites (SAT21,SAT22) du deuxième ensemble (S2) ne peuvent pas être reçus simultanément par un récepteur placé en un point situé à la surface de la Terre, chaque pseudolite émettant par ailleurs un signal de positionnement,
et un récepteur situé sur l'objet à localiser,
**caractérisé en ce que** les pseudolites sont répartis dans la zone contrainte de telle sorte qu'en tout point de la zone contrainte, il est possible au récepteur de l'objet d'acquérir les signaux de positionnement d'au moins deux pseudolites présentant des codes d'étalement correspondant, pour l'un, à un satellite du premier ensemble (S1), et, pour l'autre, à un satellite du deuxième ensemble (S2), de telle manière que le récepteur recevant ces signaux de positionnement détecte l'impossibilité qu'il s'agisse de signaux émis par des satellites de la constellation de satellites et détermine par conséquent de façon totalement autonome qu'il reçoit des signaux de positionnement émis par des pseudolites.

2. Système selon la revendication 1, la constellation de satellites présentant N ensembles de satellites, N étant supérieur ou égal à 3, non visibles de la zone d'intérêt, et de visibilité disjointe, de sorte que l'un quelconque des satellites de l'un quelconque des N ensembles de satellites ne peut pas être visible en même temps que l'un quelconque des satellites de l'un quelconque des autres ensembles de satellites parmi les N ensembles de satellites depuis un point situé à la surface de la Terre, **caractérisé en ce que** les pseudolites sont répartis dans la zone contrainte de telle sorte qu'en tout point de la zone contrainte, il est possible au récepteur de l'objet d'acquérir les signaux de positionnement d'au moins trois pseudolites présentant des codes d'étalement correspondant à des satellites appartenant à trois ensembles de satellites distincts parmi les N ensembles de satellites.

3. Système selon l'une quelconque des revendications 1 à 2, **caractérisé en ce que** les signaux de positionnement émis par les pseudolites diffusent des almanachs identiques à ceux des satellites de la constellation de satellites, de manière à assurer une continuité de service à la transition entre une zone contrainte équipée d'un ensemble de pseudolites et une zone ouverte, dépourvue de pseudolites, mais permettant la réception de signaux de positionnement émis par les satellites de la constellation, et, réciproquement, de manière à assurer une continuité de service à la transition entre une zone ouverte et une zone contrainte.

4. Système selon l'une quelconque des revendications 1 à 3, **caractérisé en ce qu'**un serveur connecté à l'ensemble de pseudolites est configuré pour attribuer dynamiquement à chaque pseudolite un code d'étalement adapté, choisi parmi des codes attribués aux satellites non-visibles de la zone d'intérêt.

5. Système selon l'une quelconque des revendications précédentes, **caractérisé en ce que** récepteur situé sur l'objet à positionner présente l'un au moins des modes de fonctionnement suivant :
• un mode de fonctionnement « zone contrainte » lorsque le récepteur se situe dans une zone dans laquelle il est susceptible de recevoir uniquement des signaux de positionnement émis par des pseudolites ;
• un mode de fonctionnement « zone ouverte » lorsque le récepteur se situe dans une zone dans laquelle il est susceptible de recevoir uniquement des signaux de positionnement émis par des satellites appartenant à une constellation de satellites d'un système de navigation par satellite ;
• un mode de fonctionnement « zone hybride » lorsque le récepteur se situe dans une zone dans laquelle il est susceptible de recevoir à la fois des signaux de positionnement émis par des pseudolites et des signaux de positionnement émis par des satellites appartenant à une constellation de satellites d'un système de navigation par satellite.

6. Système selon la revendication 5, **caractérisé en ce qu'**il est apte à basculer d'un mode de fonctionnement à un autre.

7. Système selon l'une des revendications 5 à 6, **caractérisé en ce que** le récepteur sélectionne son mode de fonctionnement de manière automatique.

8. Système selon la revendication 7, **caractérisé en ce qu'**il comprend des moyens pour forcer le mode de fonctionnement du récepteur.

9. Système selon l'une des revendications 5 à 6, **caractérisé en ce que** le mode de fonctionnement du récepteur est choisi manuellement.

## Patentansprüche

1. System zumPositionieren eines Objekts in einer Zone von Interesse, die eine beschränkte Zone aufweist, wobei das System Folgendes umfasst:
einen Satz von Pseudoliten, die in der beschränkten Zone verteilt sind und jeweils einen Spreizcode haben, der dem Spreizcode eines Satelliten entspricht, der zu einer Konstellation von Satelliten eines Satellitennavigationssystemns gehört, wobei die Konstellation von Satelliten einen ersten Satz Satelliten (S1) und einen zweiten Satz Satelliten (S2) umfasst, wobei die Satelliten des ersten (S1) und des zweiten (S2) Satzes von Satelliten von der Zone von Interesse nicht sichtbar sind, und wobei der erste (S1) und der zweite (S2) Satz von Satelliten teilweise sichtbar sind, so dass ein beliebiger der Satelliten (SAT11, SAT12) des ersten Satzes (S1) und ein beliebiger der Satelliten (SAT21, SAT22) des zweiten Satzes (S2) nicht gleichzeitig von einem Punkt auf der Oberfläche der Erde sichtbar sind, in dem Sinn, dass die Satelliten des ersten (SAT11, SAT12) und des zweiten (SAT21, SAT22) Satzes relative Positionen haben, so dass von den Satelliten (SAT11, SAT12) des ersten Satzes (S1) gesendete Signale und von den Satelliten (SAT21, SAT22) des zweiten Satzes (S2) gesendete Signale nicht gleichzeitig von einem Empfänger empfangen werden können, der sich an einem Punkt auf der Oberfläche der Erde befindet, wobei jeder Pseudolit auch ein Positionierungssignal sendet,
und einen Empfänger, der sich auf dem Objekt befindet, dessen Standort bestimmt werden soll,
**dadurch gekennzeichnet, dass** die Pseudolitein der beschränkten Zone auf eine solche Weise verteilt sind, dass es an jedem Punkt der beschränkten Zone für den Empfänger auf dem Objekt möglich ist, die Positionierungssignale von wenigstens zwei Pseudoliten mit Spreizcodes zu erfassen, die für einen einem Satelliten des ersten Satzes (S1) entsprechen und für den anderen einem Satelliten des zweiten Satzes (S2) entsprechen, so dass der die Positionierungssignale empfangende Empfänger erkennt, dass es unmöglich ist, dass dies Signale sind, die von Satelliten der Konstellation von Satelliten gesendet wurden, und demzufolge auf vollkommen autonome Weise ermittelt, dass er von Pseudoliten gesendete Positionierungssignale empfängt.

2. System nach Anspruch 1, wobei die Konstellation von Satelliten N Sätze von Satelliten beinhaltet, wobei N gleich oder größer als 3 ist, die von der Zone von Interesse nicht sichtbar sind, und mit teilweiser Sichtbarkeit, so dass ein beliebiger der Satelliten eines beliebigen der N Sätze von Satelliten von einem Punkt auf der Oberfläche der Erde nicht zur gleichen Zeit sichtbar sein kann wie ein beliebiger der Satelliten von einem beliebigen der anderen Sätze von Satelliten aus den N Sätzen von Satelliten, **dadurch gekennzeichnet, dass** die Pseudolite in der beschränkten Zone auf eine solche Weise verteilt sind, dass es dem Empfänger des Objekts an jedem Punkt der beschränkten Zone möglich ist, die Positionierungssignale von wenigstens drei Pseudoliten mit Spreizcodes zu erfassen, die Satelliten entsprechen, die zu drei getrennten Sätzen von Satelliten aus den N Sätzen von Satelliten gehören.

3. System nach einem der Ansprüche 1 bis 2, **dadurch gekennzeichnet, dass** die von den Pseudoliten gesendeten Positionierungssignale Almanache verbreiten, die mit denen von Satelliten der Konstellation von Satelliten identisch sind, um Dienstekontinuität beim Übergang zwischen einer beschränkten Zone, in der sich ein Satz von Satelliten befindet, und einer pseudolitenfreien offenen Zone zu gewährleisten, aber den Empfang von Positionierungssignalen zulässt, die von den Satelliten der Konstellation gesendet werden, und um ebenso Dienstekontinuität beim Übergang zwischen einer offenen Zone und einer beschränkten Zone zu gewährleisten.

4. System nach einem der Ansprüche 1 bis 3, **dadurch gekennzeichnet, dass** ein mit dem Satz von Pseudoliten verbundener Server so konfiguriert ist, dass er jedem Pseudoliten dynamisch einen adaptierten Spreizcode zuordnet, wobei der Spreizcode aus Codes ausgewählt ist, die den Satelliten zugeordnet sind, die von der Zone von Interesse nicht sichtbar sind.

5. System nach einem der vorherigen Ansprüche, **dadurch gekennzeichnet, dass** der Empfänger an dem Objekt, dessen Position bestimmt werden soll, wenigstens eine der folgenden Betriebsarten hat:
• eine "beschränkte Zone" Betriebsart, wenn sich der Empfänger in einer Zone befindet, in der er wahrscheinlich nur von Pseudoliten gesendete Positionierungssignale empfängt;
• eine "offene Zone" Betriebsart, wenn sich der Empfänger in einer Zone befindet, in der er wahrscheinlich nur Positionierungssignale empfängt, die von Satelliten gesendet wurden, die zu einer Konstellation von Satelliten eines Satellitennavigationssystems gehören;
• eine "Hybridzone" Betriebsart, wenn sich der Empfänger in einer Zone befindet, in der er wahrscheinlich beide Positionierungssignale empfängt, die von Pseudoliten gesendet wurden, und Positionierungssignale, die von Satelliten gesendet wurden, die zu einer Konstellation von Satelliten eines Satellitennavigationssystems gehören.

6. System nach Anspruch 5, **dadurch gekennzeichnet, dass** es so ausgelegt ist, dass es von einer Betriebsart auf eine andere umschaltet.

7. System nach einem der Ansprüche 5 bis 6, **dadurch gekennzeichnet, dass** der Empfänger automatisch seine Betriebsart wählt.

8. System nach Anspruch 7, **dadurch gekennzeichnet, dass** es Mittel zum Erzwingen der Betriebsart des Empfängers umfasst.

9. System nach einem der Ansprüche 5 bis 6, **dadurch gekennzeichnet, dass** die Betriebsart des Empfängers manuell gewählt wird.

## Claims

1. A system for positioning an object in a zone of interest having a constrained zone, said system comprising:
a set of pseudolites distributed in said constrained zone and each having a spreading code corresponding to the spreading code of a satellite belonging to a constellation of satellites of a satellite navigation system, said constellation of satellites comprising a first set of satellites (S1) and a second set of satellites (S2), with the satellites of the first (S1) and the second (S2) sets of satellites being non-visible from the zone of interest, and the first (S1) and the second (S2) sets of satellites being partially visible such that any one of the satellites (SAT11, SAT12) of the first set (S1) and any one of the satellites (SAT21, SAT22) of the second set (S2) cannot be simultaneously visible from a point located on the surface of the Earth, in the sense that the satellites of the first (SAT11, SAT12) and of the second (SAT21, SAT22) sets have relative positions such that signals transmitted by the satellites (SAT11, SAT12) of the first set (S1) and signals transmitted by the satellites (SAT21, SAT22) of the second set (S2) cannot be received simultaneously by a receiver placed at a point located on the surface of the Earth, each pseudolite also transmitting a positioning signal,
and a receiver located on the object to be localised,
**characterised in that** the pseudolites are distributed in the constrained zone in such a way that at any point of the constrained zone it is possible for the receiver present on the object to acquire the positioning signals of at least two pseudolites having spreading codes, which for one correspond to a satellite of the first set (S1) and for the other correspond to a satellite of the second set (S2) so that the receiver receiving said positioning signals detects that it is impossible that these are signals transmitted by satellites of the constellation of satellites and consequently determines, in a wholly autonomous manner, that it is receiving positioning signals transmitted by pseudolites.

2. The system according to claim 1, with the constellation of satellites having N sets of satellites, with N being greater than or equal to 3, non-visible from the zone of interest, and with partial visibility, such that any one of the satellites of any one of the N sets of satellites cannot be visible at the same time as any one of the satellites of any one of the other sets of satellites from among the N sets of satellites from a point located on the surface of the Earth, **characterised in that** the pseudolites are distributed in the constrained zone in such a way that at any point in the constrained zone it is possible for the receiver present on the object to acquire the positioning signals of at least three pseudolites having spreading codes corresponding to satellites belonging to three distinct sets of satellites from among the N sets of satellites.

3. The system according to any one of claims 1 to 2, **characterised in that** the positioning signals transmitted by the pseudolites broadcast almanachs that are identical to those of the satellites of the constellation of satellites so as to ensure continuity of service upon the transition between a constrained zone provided with a set of pseudolites and an open zone without pseudolites, but allow the reception of positioning signals transmitted by the satellites of the constellation and, at the same time, so as to ensure continuity of service upon the transition between an open zone and a constrained zone.

4. The system according to any one of claims 1 to 3, **characterised in that** a server connected to the set of pseudolites is configured so as to dynamically assign a matched spreading code to each pseudolite, which spreading code is selected from codes assigned to the satellites that are non-visible from the zone of interest.

5. The system according to any one of the preceding claims, **characterised in that** the receiver located on the object to be positioned has at least one of the following operating modes:
• a "constrained zone" operating mode when the receiver is located in a zone in which it is likely to only receive positioning signals transmitted by pseudolites;
• an "open zone" operating mode when the receiver is located in a zone in which it is likely to only receive positioning signals transmitted by satellites belonging to a constellation of satellites of a satellite navigation system;
• a "hybrid zone" operating mode when the receiver is located in a zone in which it is likely to receive both positioning signals transmitted by pseudolites and positioning signals transmitted by satellites belonging to a constellation of satellites of a satellite navigation system.

6. The system according to claim 5, **characterised in that** it is designed to switch from one operating mode to another.

7. The system according to any one of claims 5 to 6, **characterised in that** the receiver automatically selects its operating mode.

8. The system according to claim 7, **characterised in that** it comprises means for forcing the operating mode of the receiver.

9. The system according to any one of claims 5 to 6, **characterised in that** the operating mode of the receiver is manually selected.
